# EUROPEAN PATENT APPLICATION

(11) **EP 4 841 454 A1**
(43) Date of publication of application: **18.11.2026**
(21) Application number: 26177640.5
(22) Date of filing: 08.05.2026
(51) Int. Cl.: G06F 12/1027, G06F 9/52

(54) **SOURCE-SIDE FILTERING OF SYNCHRONIZATION MESSAGES IN A PROCESSOR**

(30) Priority: 12.05.2025 US 202519205236
(71) Applicant: Google LLC, Mountain View, CA 94043 (US)
(72) Inventor: TSANG, Hok Kiu Nicholas, Mountain View, 94043 (US); JI, Jyunneng, Mountain View, 94043 (US); GANAPATHY, Krishnakumar, Mountain View, 94043 (US); Leigang, KOU, Mountain View, 94043 (US); SADAYAN EBRAMSAH MO ABDUL, Sadayan Ghows Ghani, Mountain View, 94043 (US); KIRCHHOFF, Samuel David, Mountain View, 94043 (US)
(74) Representative: Maikowski & Ninnemann Patentanwälte Partnerschaft mbB

(57) **Abstract**

Implementations described herein relate to source-side filtering of synchronization messages in a multi-core processor. For example, a first core may broadcast a translation invalidation message to the other cores. Based on the broadcasting of the translation invalidation message, the first core may set a broadcast flag. The first core may then execute a first synchronization instruction when the broadcast flag is set. This execution of the first synchronization instruction may include broadcasting a synchronization message from the first core to the other cores and clearing the broadcast flag. The first core may then execute a second synchronization instruction when the broadcast flag is cleared. This execution of the second synchronization instruction may be performed without any synchronization message being broadcast from the first core to the plurality of other cores. Corresponding methods, processors, and other implementations are also disclosed.

## Description

### BACKGROUND

Processors such as central processing units (CPUs) are configured to operate by executing instructions within software code. In some cases, multiple instances of such code (e.g., different software programs, applications, threads, etc.) may be executed concurrently using time multiplexing on a single processing core and/or by executing in parallel on a plurality of processing cores included within the processor. Each of these software instances generally shares access to the same memory and device resources (e.g., including a main memory, auxiliary processing resources, peripheral input/output devices, etc.), each of which are controlled using physical memory addresses that an operating system may assign to them. While such physical addresses are used to read from and write to the memory and to control such memory-mapped devices, however, it is generally not possible to hardcode the physical memory addresses into the software, since the physical addresses are dynamically assigned and reassigned at runtime (e.g., based on what software is running at a certain time and other dynamic conditions). To address these types of challenges, processors may implement virtual address translation techniques that employ address translation caching to quickly translate virtual addresses to the proper physical addresses to which they may refer for a particular software instance.

### SUMMARY

Respective address translation caches (e.g., translation lookaside buffers (TLBs)) may be maintained by each core of a multi-core processor (e.g., by a processor being implemented as a multi-core central processing unit (CPU)) to keep track of which physical addresses are referred to by various virtual addresses in different contexts (e.g., when different software instances are running). Occasionally, one or more blocks of addresses (referred to as pages) may be remapped or otherwise overwritten or modified. For instance, this could occur when an operating system initializes a new software instance by moving other instances around in memory to make room for the new one. When such updates are made, system coherence requires that changes be implemented universally throughout the processor (e.g., by all the TLBs of all the cores). Accordingly, as a first step to this end, a core altering a memory page in its local TLB may broadcast a translation invalidation message to all the other cores to inform them that the page translation they have previously used will henceforth be invalid. The core may also broadcast a synchronization message to ensure that this translation invalidation message has fully propagated through the cores before sending information about the updated translation. While such synchronization may be relatively costly for the processor to carry out (e.g., in terms of time and processing resources), difficult software bugs can result from the absence of needed synchronization and developers may hence tend to overuse synchronization instructions in their code. Accordingly, methods and systems described herein relate to source-side filtering of synchronization messages in processor cores so that unnecessary synchronization messages called for in software are automatically filtered out by hardware that identifies them as superfluous.

In some aspects, the techniques described herein relate to a method including: broadcasting, by a first core of a processor, a translation invalidation message to a plurality of other cores of the processor; setting, based on the broadcasting of the translation invalidation message, a broadcast flag managed by the first core; executing a first synchronization instruction when the broadcast flag is set, the executing of the first synchronization instruction including broadcasting a synchronization message from the first core to the plurality of other cores and, based on the broadcasting of the synchronization message, clearing the broadcast flag; and executing a second synchronization instruction when the broadcast flag is cleared, the executing of the second synchronization instruction being performed without any synchronization message being broadcast from the first core to the plurality of other cores.

In some aspects, the techniques described herein relate to a processor including: a first core configured to manage a broadcast flag; and a plurality of other cores; wherein the first core is configured to: broadcast a translation invalidation message to the plurality of other cores; set the broadcast flag based on the broadcast of the translation invalidation message; execute a first synchronization instruction when the broadcast flag is set, the execution of the first synchronization instruction including broadcasting a synchronization message from the first core to the plurality of other cores and, based on the broadcasting of the synchronization message, clearing the broadcast flag; and execute a second synchronization instruction when the broadcast flag is cleared, the execution of the second synchronization instruction being performed without any synchronization message being broadcast from the first core to the plurality of other cores.

In some aspects, the techniques described herein relate to a processor core including: a broadcast flag managed by the processor core; and an execution unit configured to: broadcast a translation invalidation message to a plurality of other processor cores included, with the processor core, within a processor; set the broadcast flag based on the broadcast of the translation invalidation message; execute a first synchronization instruction when the broadcast flag is set, the execution of the first synchronization instruction including broadcasting a synchronization message from the processor core to the plurality of other processor cores and, based on the broadcasting of the synchronization message, clearing the broadcast flag; and execute a second synchronization instruction when the broadcast flag is cleared, the execution of the second synchronization instruction being performed without any synchronization message being broadcast from the processor core to the plurality of other processor cores.

Other implementations may perform similar functions as described above and/or may use other types of hardware to perform the functions. Certain implementations may involve systems, devices, media, and/or combinations of these, that employ processors such as described herein (e.g., with cores, caches, and/or buses configured to employ source-side filtering of synchronization messages in the ways described herein).

The details of these and other implementations are set forth in the accompanying drawings and the description below. Other features will also be made apparent from the following description, drawings, and claims.

### BRIEF DESCRIPTION OF THE DRAWINGS

FIG. 1 shows an illustrative implementation of source-side filtering of synchronization messages in a processor in accordance with principles described herein.
FIG. 2 shows an illustrative method for source-side filtering of synchronization messages in accordance with principles described herein.
FIG. 3 shows illustrative aspects of an example processor that is configured to implement source-side filtering of synchronization messages in accordance with principles described herein.
FIG. 4 shows illustrative communication paths that may be used for message communication within the processor of FIG. 3 in accordance with principles described herein.
FIG. 5 shows illustrative aspects of an example processor core that may implement one of the cores of the processor of FIG. 3 in accordance with principles described herein.
FIG. 6 shows a first data flow diagram that illustrates certain aspects and benefits of source-side filtering of synchronization messaging in accordance with principles described herein.
FIG. 7 shows a second data flow diagram that illustrates additional aspects and benefits of source-side filtering of synchronization messages in accordance with principles described herein.
FIG. 8 shows a third data flow diagram that illustrates still more aspects and benefits of source-side filtering of synchronization messages in accordance with principles described herein.
FIG. 9 shows an illustrative computing device that may use one or more processors such as those described herein.

### DETAILED DESCRIPTION

Methods and systems for source-side filtering of synchronization messages in a processor such as a central processing unit (CPU) are described herein. The processor may be implemented as a multi-core central processing unit. As detailed below, synchronization instructions may be used in software to follow up other instructions that cause address translation caches (e.g., translation lookaside buffers (TLBs)) in each core of the processor to modify or remap the address translation data they manage. For example, a synchronization instruction included in software after another instruction that causes virtual/physical address maps to be updated may cause a synchronization message to be broadcast by one core to the rest of the cores in the processor. This synchronization message may ensure that translation invalidation messages broadcast by one processor core have fully propagated through the other processor cores (such that all queued translation invalidation tasks have actually been carried out) prior to updated translation data being sent out. To address a potentially costly overuse of such instructions, methods and systems described herein relate to source-side filtering of synchronization messages (i.e., filtering the messages at the source before they are broadcast) when the messages are identified as being superfluous and unnecessary.

A processor may include a plurality of cores (also referred to herein as processor cores) that operate in parallel and intercommunicate with one another to reconcile actions that each may be taking that could affect operations being performed by the others. For example, each core may access shared resources such as main memory (e.g., a bank of dynamic random-access memory), auxiliary processing resources (e.g., a graphics processing unit), peripheral input/output devices (e.g., a hard drive controller, a universal serial bus (USB) controller, etc.), and so forth, and the cores may intercommunicate to coordinate their use of these resources. In this way, the cores can avoid conflicts such as, for instance, two cores writing different values to the same memory address at the same time, one core reading a stale version of data that another core has locally modified, or the like.

Proper coordination between cores that are otherwise operating semi-independently (e.g., each executing instructions to run different software instances that have been assigned to them) may be achieved by a variety of techniques, one of which is virtual addressing. Each of the computing resources mentioned above (and other resources accessible to the cores) may be communicated with using physical addresses. For example, within an address space, certain physical addresses may be assigned to main memory, other physical addresses (different from those assigned to main memory) may be assigned to a first memory-mapped device (e.g., a USB controller), still other physical addresses may be assigned to another memory-mapped device (e.g., a network controller), and so forth. Each software instance may also be stored and given memory space within one or more allocated blocks of main memory that may be dynamically assigned (e.g., by an operating system) at runtime based on various conditions and circumstances (e.g., what other software and data is currently stored in the memory, etc.).

Thus, while physical addresses are used to perform memory transactions (e.g., loads, stores, etc.) and to control memory-mapped devices (e.g., reading and writing control registers, etc.), it is generally not practical or possible for a complex (e.g., multi-core) processor to hardcode physical memory addresses for these shared resources into the software. Rather, software generally uses virtual addresses that are translated to physical addresses when being used for purposes that are external to the local concerns of the core (e.g., when being sent to a shared cache that will have more direct communication with memory and devices). This allows flexibility for an operating system to dynamically assign and reassign (e.g., map and remap, etc.) the virtual and physical addresses at runtime in ways that would be unforeseeable prior to runtime.

Various virtual address translation techniques may be employed by modern processors to address challenges relating to virtual address translation. For example, each core may maintain a local address translation cache that is configured to keep track of mappings between various virtual addresses relevant to a particular context (e.g., a software instance it is executing) and physical addresses to which those virtual addresses correspond. One example of such a cache is referred to as a translation lookaside buffer (TLB). It will be understood that address translation caches such as TLBs are distinct from other caches described herein such as a local level 1 (L1) cache that a core may use to store local copies of frequently used memory entries and a shared level 2 (L2) cache that all the cores may communicate with to efficiently access frequently used memory entries. Additionally, while a shared TLB (accessible to several or all of the cores of the processor) might be employed in certain implementations, it will be understood that latency requirements for address translation are generally stringent enough that each core maintains its own TLB (which can be accessed very quickly, such as within one clock cycle) that is updated and reconciled with the others in the ways described herein.

As mentioned above, the mappings of virtual addresses to physical addresses stored in a TLB may be dynamic and subject to change from time to time. For example, one or more blocks of addresses (referred to as pages) could be remapped (or otherwise overwritten or modified) when a new software instance is being initialized and the operating system has to move software instances and/or other data around in memory to make room for the new one. When one core makes such updates to its own local TLB, system coherence therefore requires that the updates be communicated to the other cores so that they may be implemented universally throughout the processor. Generally, this type of update may be accomplished in three phases: 1) the source core (i.e., the core altering at least one memory page in its local TLB) may broadcast a translation invalidation message to all the other cores to inform them that the page translation they may have previously used will henceforth be invalid; 2) the source core may broadcast a synchronization message to ensure that this translation invalidation message has been received and fully carried out by the other cores (which may each report back when they have cleared their queues of all translation invalidation tasks); and 3) the source core may then broadcast updated translation information, which the other cores may receive and update.

As used herein, translation invalidation messages refer to messages shared between cores of a processor (e.g., directly or by way of a multi-access data cache such as described below) to invalidate entries of the local address translation caches or buffers (e.g., TLBs) maintained by each core. For example, referring to the first phase of the translation update described above, one example of a translation invalidation message may be a TLB invalidation (TLBI) message. Such TLBI messages (or TLBIs, for short) may refer to large blocks of memory containing several pages. For example, if 70 pages of the source core's TLB are to be remapped, a TLBI may be broadcast that covers those 70 pages. Alternatively, a burst of 70 one-page TLBIs could be broadcast to all the cores of the processor to invalidate any entries that any of the cores may have in their TLBs for those specific pages. It would generally be wasteful and unnecessary for every core (of which there could be a relatively high number) to acknowledge the receipt and/or even the completion of each and every TLBI that it receives from every other core. Accordingly, rather than flood the communication bus between the cores with such acknowledge messages, a broadcast of a TLBI is generally sent out to each core, where it is then queued for the core to perform at its earliest convenience. For certain cores, a translation invalidation task requested by the translation invalidation message (i.e., the TLBI) may be performed right away, while for other cores, the translation invalidation task may be performed many clock cycles later (e.g., if the core is busy with other tasks, if the core already has various translation invalidation tasks in the queue, etc.).

Even if every core is guaranteed to get around to every translation invalidation task in the queue eventually, a technical problem arises as a result of the non-transparent nature of when each translation invalidation message is attended to by each core. For example, while the source core may send out a TLBI for a particular page that is being remapped and may safely assume that the TLBI will be acted on by each core at some point in time, the source core may have no insight into when that TLBI has actually been completed by all the other cores so that the new address mapping can be broadcast (phase 3 above). One way to address this technical problem may involve broadcasting a synchronization message such as was mentioned in connection with the second phase above. For example, a synchronization message may be broadcast by the source core as part of executing a synchronization instruction that is received after the one or more instructions that triggered the TLBIs to be sent. One example of such a synchronization instruction is referred to as a data synchronization barrier (DSB) instruction. A DSB instruction (or DSB for short) may be included in the software code following any instructions that cause memory addresses to be remapped.

Synchronization instructions such as DSBs may be relatively costly for a processor to carry out in terms of time and processing resources (e.g., clock cycles, bus traffic, etc.), since they may require each core to receive the synchronization message, clear out their translation invalidation task queue, and acknowledge that all their tasks are complete. Once the synchronization instruction is received and the synchronization message is broadcast, it is also costly to processor performance that all memory transactions are delayed from execution until the synchronization instruction is complete. Some of these costs may be mitigated by a source core sending out a synchronization message strategically, such as at the latest acceptable point in time before the synchronization must be performed for the software to function properly. This allows the other cores to process translation invalidation tasks at a natural pace without actively delaying other work from being done. For example, if a batch of TLBIs is broadcast by a source core and then the source core does other work for a period of time before broadcasting a follow-up DSB, the other cores may largely have completed the translation invalidation tasks requested by the TLBIs before the synchronization message is even received, thereby minimizing the performance impact that it has.

Another technical problem can occur, however, if this partial mitigation of the synchronization costs is spoiled by a synchronization message from another core that was not the source core that broadcast the TLBIs. Superfluous synchronization messages create a technical problem in and of themselves (e.g., by needlessly reducing performance and using clock cycles and other resources without accomplishing useful work), but they can be especially harmful to performance when they come at a time when translation invalidation task queues are relatively full of tasks ordered by other cores for other unrelated addresses. For example, superfluous synchronization messages could cause cores to pause execution of other instructions for hundreds of clock cycles or more while a translation invalidation task queue is being cleared out, even if that pause is not necessary for proper function of the code.

There are a variety of reasons that such superfluous synchronization messages may be broadcast even though they hurt performance, consume resources, and present other technical problems. Often, such messages are the result of superfluous and unnecessary synchronization instructions that are included in the software code that is being executed. An absence of necessary synchronization instructions can lead to undesirable and unexpected behaviors (e.g., software bugs) that can be very difficult to diagnose and fix (e.g., to debug). As a result, there may be a tendency for software developers to use synchronization instructions relatively liberally, such as to include these instructions whenever there is any question about whether one might be useful. For example, synchronization instructions could be included at the beginning and at the end of every subroutine a developer writes, such that when two subroutines are called back-to-back, two synchronization instructions are performed back-to-back without any good justification for at least the second one. Moreover, when problems do arise and a developer is troubleshooting or debugging their code, it can be a fruitful debugging technique to add synchronization instructions at various places in the code to see if any of them help solve the problem. When the problem is eventually fixed, it may not be easy to then determine which of these instructions may have been superfluous and is not actually helping, thereby creating a temptation for the develop to just leave them all in, creating even more superfluous synchronization instructions.

One technical solution to address the technical problem of superfluous synchronization instructions (and the costly synchronization messages that they trigger) would be for each core receiving a synchronization message to make a determination whether the synchronization message is necessary or superfluous. However, reliably being able to make this type of determination may be difficult and costly for the core, as it would need to keep track of which translation invalidation tasks were ordered by which core and to determine whether it actually makes sense that a core that broadcast the synchronization message would have done so for legitimate reasons (e.g., if that same core recently provided TLBIs that caused at least one of the translation invalidation tasks to be added to the queue, etc.). If those determinations could be made, it may be possible for a receiving core to filter synchronization messages and mitigate at least some of their performance costs (though the messages still were broadcast and used bus resources, power, etc., in that process). Practically, however, this has proven to be a difficult and relatively inefficient way to address the problem.

Another technical solution to the problem could involve scrubbing the code itself to try to eliminate superfluous synchronization instructions. Certain techniques have been developed to this end, but this approach tends to be prone to human error and far from perfect or ideal. Even after a careful review, certain superfluous synchronization instructions may still slip through the cracks or, worse, effective (i.e., non-superfluous) synchronization instructions may be inadvertently removed to create more significant problems.

At least one technical solution described herein is able to address the problem of superfluous synchronization instructions while still ensuring that proper synchronization is achieved after translation invalidation messages are broadcast and while avoiding the shortcomings of the other potential solutions mentioned above. Specifically, as detailed herein, methods and systems for source-side filtering of synchronization messages may be used to identify superfluous synchronization instructions at the source core and filter the corresponding synchronization messages before they are actually broadcast. For example, a broadcast flag may be managed by each core to track when it has broadcast at least one translation invalidation message to the other cores. As used herein, broadcast flags refer to hardware storage elements (e.g., registers, flip-flops, latches, etc.) that are configured to be set (e.g., to a first binary value such as '1' or HIGH) and cleared (e.g., to a second binary value such as '0' or LOW) to keep track of when at least one translation invalidation message has been broadcast by one core that could still be pending (e.g., queued or in process but not yet completed) in other cores. The flag may be cleared (i.e., reset) after a synchronization message is sent out and then set whenever a translation invalidation message is sent out. In this way, if the broadcast flag is already cleared when a new synchronization instruction is received, that instruction can be safely nullified (e.g., disposed of, canceled, ignored, NOPed, downgraded, etc.) without actually sending any synchronization message.

The technical solution described herein that allows certain synchronization instructions (e.g., those determined to be superfluous using the broadcast flag) to be executed without broadcasting any synchronization message is referred to herein as source-side filtering of the synchronization message. This technical solution may lead to a variety of beneficial technical effects, such as all of the benefits of the inferior technical solutions described above, except without the drawbacks that those solutions provided. More particularly, source-side filtering of synchronization messages in accordance with principles described herein may facilitate higher performance for the processor by allowing fewer unnecessary delays, more instructions executed per unit of time, less average latency for any given instruction to be executed, and so forth. Moreover, by filtering superfluous synchronization messages at the source (i.e., before they are broadcast out), less traffic may be put on the communication bus, leading to beneficial technical effects such as fewer conflicts, fewer traffic-induced communication delays, less power being consumed, and the like. Along with increased efficiency on the source side of the communication, the receiver side too may benefit from not being tasked with unnecessary synchronization requests at inopportune times. Clock cycles and power may be preserved by the cores not needing to receive and process superfluous synchronization messages, and the situation described above, in which one core forces an untimely synchronization of translation invalidation tasks requested by a different core, may be avoided altogether.

Various implementations will now be described in more detail with reference to the figures. It will be understood that particular implementations described below are provided as non-limiting examples and may be applied in various situations. Additionally, it will be understood that other implementations not explicitly described herein may also fall within the scope of the claims set forth below. Source-side filtering of synchronization messages in a processor in accordance with principles described herein may result in any or all of the technical effects mentioned above, as well as various additional and/or alternative beneficial technical effects described and/or made apparent below.

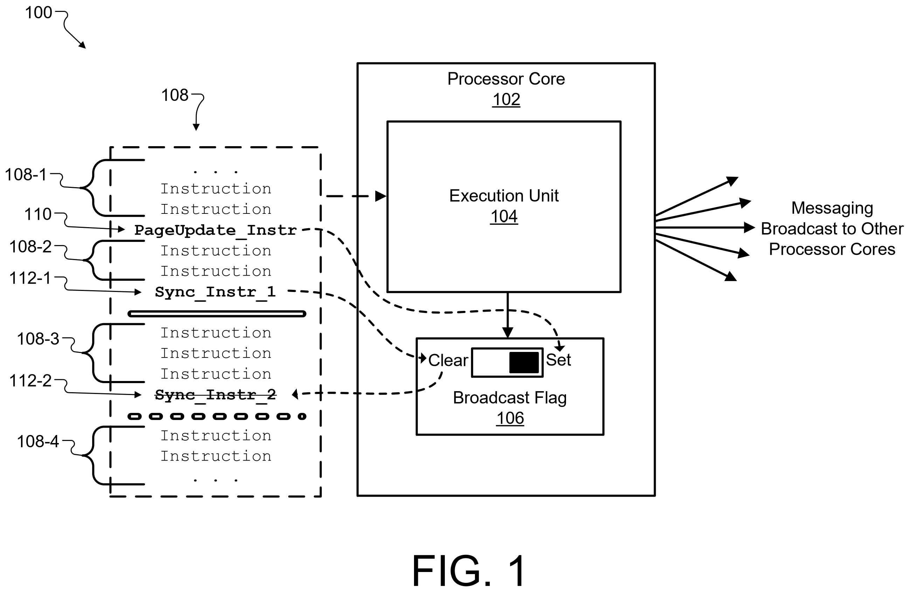

FIG. 1 shows an illustrative implementation 100 of source-side filtering of synchronization messages in a processor in accordance with principles described herein. As shown, implementation 100 includes a processor core 102 that includes an execution unit 104 managing a broadcast flag 106 that can be either cleared ("Clear") or set ("Set"). Processor core 102 may represent one core of a plurality of cores within a processor, as will be further illustrated and described below. More particularly, as noted in the figure and as will now be described, processor core 102 may serve, in this example, as the source core that is providing messaging broadcasts (e.g., translation invalidation messages such as TLBIs, synchronization messages such as DSBs, etc.) to other processor cores. While this processor core 102 will be described in the following example as being the broadcaster of messaging (i.e., the source core) while other processor cores within the processor are described as receiving the broadcasts (i.e., the receiving cores), it will be understood that each core of a processor may be concurrently broadcasting messages to the other cores and receiving messages from the other cores in a similar way. For example, each core may send and receive messages based on the instructions it is tasked with executing, making each core both a source core and a receiving core with respect to different messages.

Execution unit 104 may represent circuitry of one or more functional units within processor core 102 that are configured to execute software instructions. For example, a set of instructions 108 are shown to be assigned to this particular processor core 102 for execution unit 104 to execute. It will be understood that a processor core may include various execution units for executing different types of instructions, as well as various other facilities for preprocessing and/or postprocessing the instructions in various ways. A simplified view of processor core 102 is shown in this example to focus on certain aspects of source-side filtering of synchronization messages that will now be described.

As shown at the top of the set of instructions 108, certain instructions 108-1 (each generically labeled as "Instruction") may be performed that will be understood to be outside the scope of the source-side synchronization message filtering being described. As execution unit 104 is executing these instructions, however, an instruction 110 is shown to be received that triggers a change in an address translation cache (e.g., a translation lookaside buffer (TLB)) managed by processor core 102 (not explicitly shown in the figure). In the example of FIG. 1, instruction 110 is illustrated as a "PageUpdate_Instr," suggesting that the instruction causes a virtual-to-physical address mapping represented in the address translation cache for at least one page to be updated. This instruction 110 could represent various specific types of instructions depending on the instruction set and/or computing architecture used for a particular implementation. For purposes of this example, however, it will be understood that instruction 110 requests an update to the address translation cache that triggers at least one translation invalidation message (e.g., a TLBI) to be broadcast from processor core 102 to the other cores.

As shown by an arrow extending from instruction 110 to the "Set" side of broadcast flag 106, the broadcasting of the translation invalidation message may cause the broadcast flag 106 to be set. In other words, processor core 102 may set the flag in response to or as part of the execution of instruction 110. As has been described, this flag may serve to keep track of the fact that at least one translation invalidation message has been broadcast that may or may not still be pending in the other cores (since, as described above, the other cores may receive and carry out the message without providing any feedback to the source core). Broadcast flag 106 may be implemented as a standalone register (e.g., a flip-flop or other suitable storage element), as a sticky bit in another status register managed by processor core 102, or in another suitable way.

Subsequent to the execution of instruction 110 and the corresponding broadcast of the translation invalidation message, the set of instructions shows that additional instructions 108-2 may be performed. While only two instructions are shown in this example, it will be understood that any suitable number of instructions could be included in this subset. Indeed, as mentioned above, it may be advantageous for the software to do as much useful work as possible between instruction 110 and a synchronization instruction 112-1 (described in more detail below) since this gives the other cores a chance to perform requested translation invalidation tasks organically and on their own schedule, rather than when all other operation is halted to wait for those tasks to be confirmed to be completed (as may be necessary if a synchronization instruction is received before the translation invalidation queues are emptied out on their own accord).

After some amount of time, however, the set of instructions shows that a first synchronization instruction 112-1 ("Sync_Instr_1") is received, which, as described above, may create a memory barrier that disallows any other memory transaction from being performed until it can be confirmed that certain previous tasks (including outstanding translation invalidation tasks) have been completed. A horizontal line is shown below synchronization instruction 112-1 to represent this barrier. Additionally, as shown by an arrow extending from synchronization instruction 112-1 to the "Clear" side of broadcast flag 106, the broadcasting of the synchronization message may cause the broadcast flag 106 to be cleared. In other words, processor core 102 may clear the flag in response to or as part of the execution of synchronization instruction 112-1. It will be understood that a synchronization message may be broadcast as part of the execution of synchronization instruction 112-1 based on the fact that broadcast flag 106 is set when synchronization instruction 112-1 is reached. This is because the set flag indicates that at least one translation invalidation message has been broadcast (e.g., in response to instruction 110 in this case) that could still be pending in one or more of the other cores.

Once broadcast flag 106 is cleared, however, it will be understood that there is no need for further synchronization messages on this core's account until additional translation invalidation messages are broadcast (whereupon the flag would again be set). In other words, even if other cores have issued translation invalidation messages that have left translation invalidation tasks in some of the queues, those cores are responsible for sending their own synchronization messages in their own time (e.g., after giving some time, if possible, for the tasks to be performed at their own pace without forcing a pause in execution, as has been described). For the present core 102 to send out a synchronization message would be superfluous and, while it would not necessarily risk causing any functional problems (i.e., the software would still operate as expected), such a superfluous synchronization message could reduce the overall processor performance in terms of latency, power, and other aspects such as have been described.

Accordingly, as illustrated in the set of instruction 108 under the horizontal bar associated with synchronization instruction 112-1, processor core 102 may continue processing various instructions 108-3 (e.g., any suitable number of such instructions, though three are shown in this example) while broadcast flag 106 is cleared. If, during this time (and while broadcast flag 106 is still cleared) a second synchronization instruction 112-2 ("Sync_Instr_2") is received, processor core 102 may safely nullify that instruction based on the broadcast flag 106 being cleared. This is illustrated in FIG. 1 by an arrow extending from the Clear side of broadcast flag 106 to a "Sync_Instr_2" that is printed with struck-through text in FIG. 1, as well as by the corresponding horizontal bar under second synchronization instruction 112-2 being dotted, rather than solid. In other words, based on broadcast flag 106 being cleared when second synchronization instruction 112-2 is executed, second synchronization instruction 112-2 may be executed without broadcasting any translation invalidation message. As used herein, this type of execution may be referred to as nullifying the instruction (i.e., replacing the synchronization instruction with a null or no-operation (NOP) instruction), ignoring the instruction, canceling or bypassing the instruction, downgrading the instruction, or the like. In any of these cases, second synchronization instruction 112-2 may be executed by processor core 102 filtering the second synchronization instruction 112-2 and abstaining from broadcasting any translation invalidation message (e.g., a TLBI) to the other cores.

This filtering (i.e., abstention from or forgoing of the broadcasting of the superfluous translation invalidation message ordered by second synchronization instruction 112-2) may provide any or all of the beneficial technical effects described above. For example, processor core 102 may save time and power by having one less message to broadcast; each of the other cores may save time and power by having one less message to receive and process; the communication bus may use less power and have less traffic congestion (to slow down other important messaging) by having one less message to carry; and no core will needlessly pause any memory transaction (and take the corresponding performance hit) for a synchronization barrier that superfluous and unnecessary. After the nullifying of second synchronization instruction 112-2, FIG.1 shows that processor core 102 may continue working through the set of instructions with any number of other instructions 108-4.

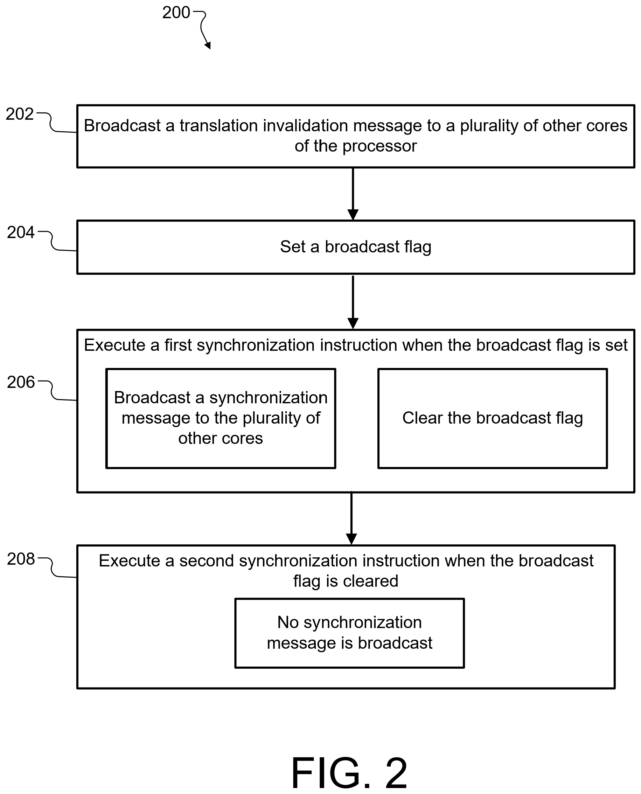

FIG. 2 shows an illustrative method 200 for source-side filtering of synchronization messages in accordance with principles described herein. The operations of method 200 may be performed by a first core of a processor that also includes other cores. More particularly, as described above in relation to FIG. 1, the operations of method 200 could be performed by a particular execution unit of the first core, such as by execution unit 104 of processor core 102. While FIG. 2 shows illustrative operations according to a specific implementation, it will be understood that other implementations of this method may omit, add to, reorder, and/or modify any of operations that are explicitly represented in FIG. 2. Additionally, while these operations are illustrated with arrows suggestive of a sequential order of operation, it will be understood that one or more of the operations may be performed concurrently (e.g., in parallel) with one another. Each of the operations of method 200 will now be described in more detail.

At operation 202, the first core may broadcast a translation invalidation message to a plurality of other cores of the processor. For example, the translation invalidation message may be implemented as a translation lookaside buffer invalidation (TLBI) message configured to task the other cores with invalidating (e.g., deleting) certain entries stored in their local translation caches (e.g., their local translation lookaside buffers (TLBs)). In some examples, the translation invalidation message may be one message of a batch of messages that the first core broadcasts as a large chunk of memory (e.g., many pages of memory) are remapped from one virtual-physical address mapping to another. In any case, as has been described, the first core may dispatch the translation invalidation message to the other cores without anticipating any response from the other cores. Rather, after broadcasting the message, it is assumed that every core receives and carries out the tasks requested by the message in its own due time, though certain cores, if they are presently occupied with other tasks, may queue the translation invalidation tasks to perform at a later time.

At operation 204, the first core may set a broadcast flag managed by the first core. For example, the broadcast flag may be implemented by broadcast flag 106 or a similar flag or store bit that can be set (e.g., made to store a first binary value such as '1' or ON) and cleared (e.g., made to store an opposite binary value such as '0' or OFF). The setting of the broadcast flag at operation 204 may be performed based on the broadcasting of the translation invalidation message at operation 202. For example, as has been described, the broadcasting of the translation invalidation message (e.g., one or more TLBs) may change the broadcast status for the first core such that, if a synchronization instruction is encountered, the first core has to presume that there may well be outstanding translation invalidation tasks from earlier translation invalidation messages (such as the one broadcast at operation 202) that have not yet completed.

At operation 206, the first core may execute a first synchronization instruction. Specifically, when (e.g., while) the broadcast flag is still set (from when it was set at operation 204) the first core may receive a synchronization instruction such as a data synchronization barrier (DSB) instruction. To execute this first synchronization instruction, operation shows two suboperations in FIG. 2, which may be performed concurrently or in any order.

In a first suboperation of operation 206, the first core may broadcast a synchronization message from the first core to the plurality of other cores. As has been described, this synchronization message may be configured to indicate to the other cores that they are to clear out their translation invalidation message queues (as well as, in certain implementations, to complete other tasks beyond the scope of this disclosure) and report back when these tasks are confirmed to be completed (and no longer pending or outstanding).

In a second suboperation of operation 206, the first core may clear the broadcast flag. For example, this clearing of the broadcast flag may be based on the broadcasting of the synchronization message. As has been described, the flag may be cleared because, until another translation invalidation message is broadcast and the flag is returned to the set state, there would be no benefit to be gained from forcing additional synchronization tasks on the account of the first core. The only consequences of additional synchronization messages being broadcast while the flag is cleared would be negative or neutral (e.g., loss of performance, such as has been described).

Accordingly, at operation 208, the first core may execute a second synchronization instruction when (e.g., while) the broadcast flag is still cleared (i.e., from the second suboperation of operation 206). As described above, the cleared flag indicates that this second synchronization instruction is superfluous and there would be no beneficial effect that comes from carrying it out in the normal way (e.g., by broadcasting a synchronization message to the other cores and thereby forcing a pause on all memory transactions until certain queued tasks are completed). There may be, however, various detrimental effects (e.g., diminished performance) that could result from performing the second synchronization instruction in the usual way. Accordingly, as shown, the executing of the second synchronization instruction may be performed without any synchronization message being broadcast from the first core to the plurality of other cores (a single suboperation indicating that "No synchronization message is broadcast").

For example, this may be achieved by nullifying the second synchronization instruction by replacing it with a NOP instruction or otherwise filtering, canceling, or ignoring the instruction (or at least the aspects of it that relate to sending out a synchronization message). In other examples, the second synchronization instruction may be converted (e.g., downgraded) from one type of synchronization instruction (e.g., a DSB) to a different type of synchronization instruction that has much less impact than the first type. For instance, while a DSB involving a synchronization message may take hundreds of cycles to perform, a downgraded type of synchronization instruction (e.g., which may involve a different type of message that does not require all the translation invalidation tasks to be complete and thus takes only a small fraction of that number of clock cycles to complete) may be employed instead.

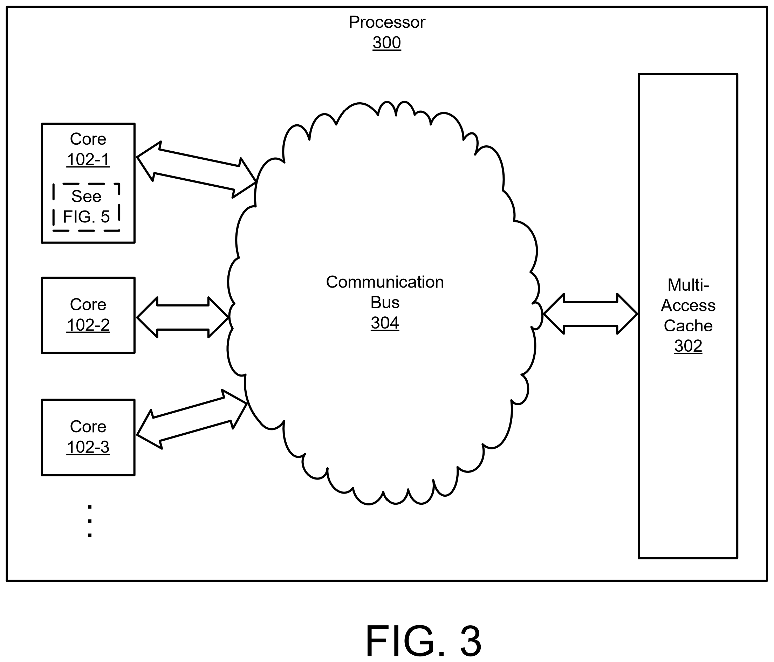

FIG. 3 shows illustrative aspects of an example processor 300 that is configured to implement source-side filtering of synchronization messages in accordance with principles described herein. For example, processor 300 may be implemented as a multi-core central processing unit (CPU) or, in certain examples, another type of processor such as a graphics processing unit (GPU), a microprocessor, or the like. Processor 300 is shown to include a first core 102-1 and a plurality of other cores 102-2, 102-3, and so forth (additional cores represented in the figure by an ellipsis). For example, some example implementations could include two cores, four cores, eight cores, twelve cores, sixteen cores, thirty-two cores or any other number of cores as may serve a particular implementation. For examples described herein, the first core 102-1 will be understood to be the source core that is broadcasting the various messaging being described (like processor core 102 described above in relation to FIG. 1), while the other cores 102-2, 102-3, and so forth will receive these broadcast messages and act accordingly (including, in some cases, sending responses back to first core 102-1). It will be understood, however, that concurrently with these interactions, any of the other cores could likewise serve as source cores for their own messaging while first core 102-1 receives and acts on those messages.

Along with the processing cores (i.e. cores 102-1, 102-2, 102-3, etc.), processor 300 is also shown to include a multi-access cache 302 configured to serve the first core 102-1 and the plurality of other cores (cores 102-2, 102-3, etc.), and a communication bus 304 communicatively coupling multi-access cache 302 to the first core 102-1 and to each of the plurality of other cores 102-2, 102-3, and so forth. For example, multi-access cache 302 may represent a level 2 (L2) cache that is communicatively coupled to a memory controller (not shown in FIG. 3) and is configured to cache certain data (e.g., to temporarily stage frequently-accessed data for low-latency access by the cores on the data's way to or from main memory and/or a variety of memory-mapped devices). In this way, multi-access cache 302 may perform or facilitate memory transactions (e.g., load transactions whereby data is obtained from memory or a device, store transactions whereby data is sent to memory or a device, etc.) requested by all of the cores of processor 300.

Communication bus 304 may be configured to carry data transmission from the cores to multi-access cache 302, from multi-access cache 302 to any or all of the cores, from one core to another core, and/or between these and/or other components of processor 300 not explicitly shown. For example, communication bus 304 may include a variety of transmission nodes (not explicitly shown in FIG. 3) arranged and interconnected in any suitable way. For example, transmission nodes may be connected in any suitable topology such as a point-to-point topology, a mesh topology, a ring topology, a star topology, a tree topology, a hybrid topology incorporating elements of two or more of these, or the like. In this way, each of the cores 102-1, 102-2, 102-3, etc., may be connected to multi-access cache 302, as well as to one another (and, possibly, to other elements of processor 300 not explicitly shown).

Any of the cores shown in the implementation of processor 300 may be configured to perform method 200 and/or other methods, processes, and techniques described herein. For example, the first core 102-1 may be configured to: 1) broadcast a translation invalidation message to the plurality of other cores 102-2, 102-3, etc.; 2) set the broadcast flag (not shown in FIG. 3) based on the broadcast of the translation invalidation message; 3) execute a first synchronization instruction when (e.g., while) the broadcast flag is set, the execution of the first synchronization instruction including (a) broadcasting a synchronization message from first core 102-1 to the plurality of other cores 102-2, 102-3, etc., and, (b) based on the broadcasting of the synchronization message, clearing the broadcast flag; and 4) execute a second synchronization instruction when (e.g., while) the broadcast flag is cleared, the execution of the second synchronization instruction being performed without any synchronization message being broadcast from the first core 102-1 to the plurality of other cores 102-2, 102-3, and so forth.

The broadcasting of messages, such as the translation invalidation message and the synchronization message in this example, may be performed directly via the communication bus 304 in certain examples (e.g., a first message sent directly from first core 102-1 to core 102-2, a second message sent directly from first core 102-1 to core 102-3, etc.). In other examples, however, these types of communications (e.g., broadcast communications from one core to all the others) may be performed using multi-access cache 302, which is already configured to help manage and coordinate all the cores in various ways. For example, the broadcasting of a synchronization message from the first core 102-1 to the plurality of other cores 102-2 and 102-3 may include, in one example: 1) sending, by way of communication bus 304, the synchronization message from first core 102-1 to multi-access cache 302, and 2) sending, by way of the communication bus 304, the synchronization message from multi-access cache 302 to the plurality of other cores 102-2, 102-3, and so forth.

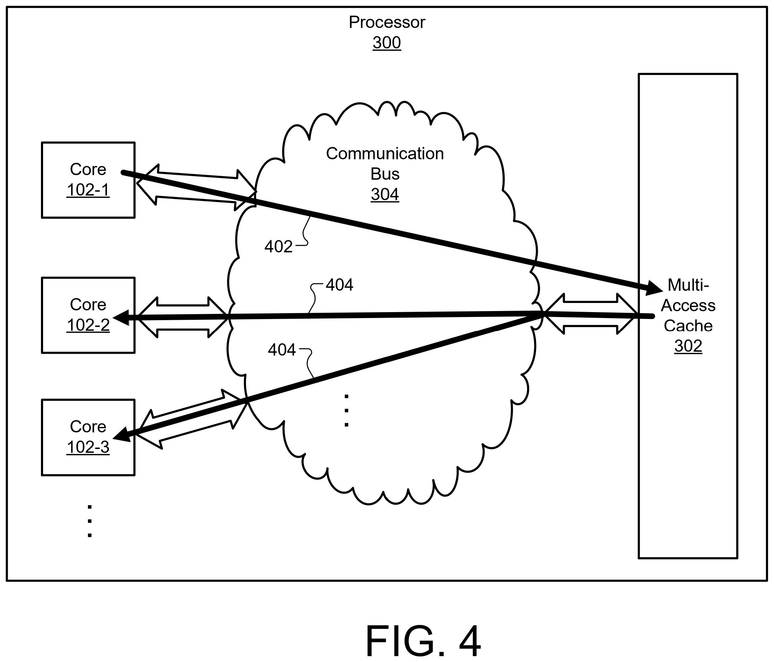

To illustrate, FIG. 4 shows example communication paths that may be used for message communication within processor 300 in accordance with principles described herein. More particularly, for a message broadcast from first core 102-1 to the other cores (e.g., cores 102-2, 102-3, etc.) a first communication path 402 shows that first core 102-1 may send the message to multi-access cache 302 by way of communication bus 304. Similar paths 404 from multi-access cache 302 to each of the other cores 102-2 and 102-3 (as well as additional paths to additional cores represented by an ellipsis) are then shown, whereby the message may be sent, again by way of communication bus 304, from multi-access cache 302 to the plurality of other cores.

The traversal of paths 402 and 404 may represent how one message (e.g., a translation invalidation message, a synchronization message, etc.) may be broadcast from first core 102-1 to the other cores of processor 300. It will be understood that the reverse of these paths may also be used to allow for each of the other cores (e.g., including cores 102-2 and 102-3) to respond to a broadcast message from first core 102-1. For example, when first core 102-1 broadcasts a synchronization message, each of the other cores 102-2 and 102-3 may be configured to complete all the translation invalidation tasks in their respective queues (as well as to complete certain other tasks outside the scope of this disclosure in certain examples) and to confirm or acknowledge back to first core 102-1 that the translation invalidation messages have been fully carried out and are no longer pending. Rather than replying directly to first core 102-1, these cores may provide their completion messages to multi-access cache 302 (e.g., by way of respective paths 404, but in the opposite direction), whereupon, when all of the completion messages are received, multi-access cache 302 may transmit a single completion message to first core 102-1 to indicate that the synchronization has been confirmed to be complete so that further instructions may be performed (e.g., new mapping entries may be written to the TLBs since the previous links have all been confirmed invalidated by the DSB).

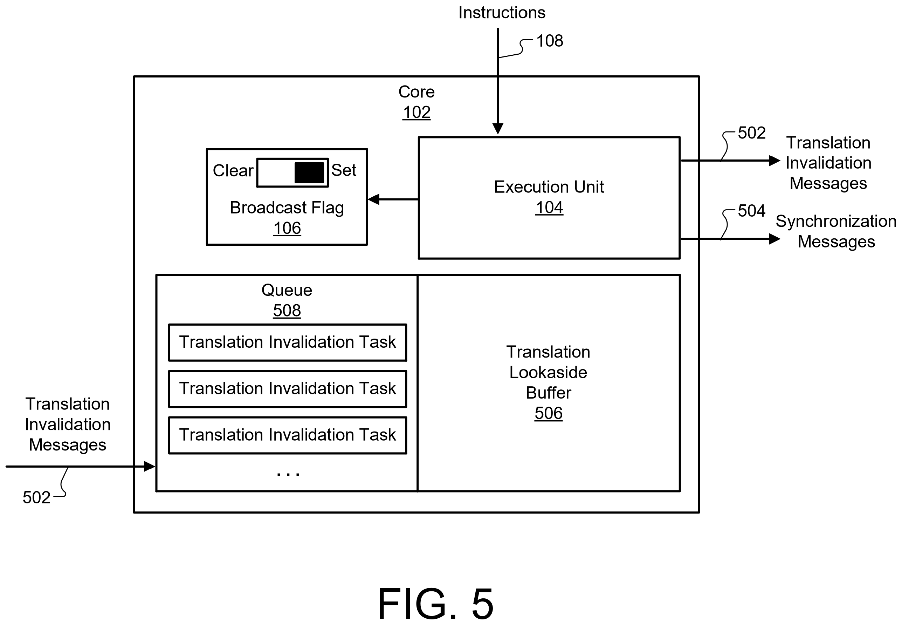

As indicated by a dashed-line tag associated with first core 102-1 in FIG. 3 ("See FIG. 5"), FIG. 5 shows illustrative aspects of an example processor core 102 that may implement first core 102-1 or any of the other cores (e.g., cores 102-2, 102-3, etc.) of processor 300 in accordance with principles described herein. It will be understood that the components shown in the implementation of core 102 in FIG. 5 represent only certain components of the core that are relevant to the discussion at hand of source-side filtering of synchronization messages. Other components may also be included in a processor core that are not shown in this example.

As shown, core 102 includes an execution unit 104 and a broadcast flag 106 managed by core 102. These elements are similar to like-numbered elements described above in other examples. For instance, in accordance with a method such as method 200 and an incoming set of instructions such as instructions 108 described in relation to FIG. 1, execution unit 104 may be configured to: 1) broadcast a translation invalidation message 502 to a plurality of other processor cores included, with processor core 102, within a processor; 2) set broadcast flag 106 based on the broadcast of the translation invalidation message 502; 3) execute a first synchronization instruction (within the set of instructions 108) while broadcast flag 106 is set, the execution of the first synchronization instruction including broadcasting a synchronization message 504 from processor core 102 to the plurality of other processor cores and, based on the broadcasting of synchronization message 504, clearing broadcast flag 106; and 4) execute a second synchronization instruction (within the set of instructions 108) when the broadcast flag is cleared, the execution of the second synchronization instruction being performed without any synchronization message 504 being broadcast from processor core 102 to the plurality of other processor cores.

Moreover, along with the elements that have already been described (e.g., execution unit 104, broadcast flag 106, set of instructions 108, translation invalidation message 502, synchronization message 504, etc.), core 102 is shown to further include a local translation cache implemented, in this case, as a local translation lookaside buffer 506 (also referred to as a TLB), which may be configured to facilitate translation of virtual memory addresses to physical memory addresses in the ways described above. In connection with translation lookaside buffer 506, core 102 is also shown to include a queue 508 for storing tasks that may be pending in relation to translation lookaside buffer 506. For example, as shown, a plurality of translation invalidation tasks requested by various translation invalidation messages 502 broadcast by other cores and received by core 102 may be stored in queue 508 until processor core 102 has time to carry out the tasks (e.g., to invalidate the indicated mappings associated with each translation invalidation task within translation lookaside buffer 506). In other words, while various elements (e.g., execution unit 104, broadcast flag 106, set of instructions 108, translation invalidation messages 502, synchronization messages 504, etc.) have been described above in the context of core 102 being a source of broadcast messages, queue 508 and the translation invalidation tasks requested by received translation invalidation messages 502 may be relevant to the context of core 102 being a receiver of messages broadcast by other cores.

Just as core 102 is shown to include its own local translation lookaside buffer 506, it will be understood that each of the plurality of other cores may also include their own respective local translation lookaside buffers (TLBs) configured to facilitate the translation of virtual memory addresses to physical memory addresses. For example, as mentioned, it may be useful for each core to maintain its own local TLB so that physical addresses may be obtained quickly (e.g., within one clock cycle) as memory transaction instructions are executed. Accordingly, when one TLB (e.g., translation lookaside buffer 506) has an update to a certain virtual-to-physical address mapping (e.g., a page table update requested by operating system instructions, etc.) that change is pushed through to all the other local TLBs of the other cores, starting with a confirmed invalidation of the previous mapping that they may hold. To this end, translation invalidation messages 502 may be implemented as TLB invalidation (TLBI) messages configured to invalidate corresponding entries in each of the respective local TLBs.

After the TLBI messages are broadcast, the next step may be to ensure that the TLBI messages have been received and carried out (e.g., queued as translation invalidation tasks that have subsequently been completed so that no TLB still includes the now-invalid entries). This step may be accomplished by execution of a synchronization instruction such as has been described. For example, core 102 and the plurality of other cores of the processor may be configured to perform out-of-order execution of memory access instructions. As such, each synchronization instruction may be implemented as a data synchronization barrier (DSB) instruction configured to ensure completion of pending memory access instructions prior to execution of an instruction subsequent to the DSB instruction. For example, the DSB instruction may trigger a synchronization message to be broadcast that instructs each core to clear out their respective queues of translation invalidation tasks and confirm that the tasks are complete prior to continuing with the execution of subsequent instructions. As has been described, such DSB instructions may be useful in maintaining memory ordering and ensuring data consistency, especially in multi-core processors and systems with shared caches (e.g., since they help guarantee that memory operations happen in a predictable sequence as intended by the software developer). However, as has also been described, superfluous DSB instructions (which developers may be prone to include for various reasons outlined above) may also lead to performance issues that can be addressed by source-side filtering of synchronization messages in accordance with principles described herein.

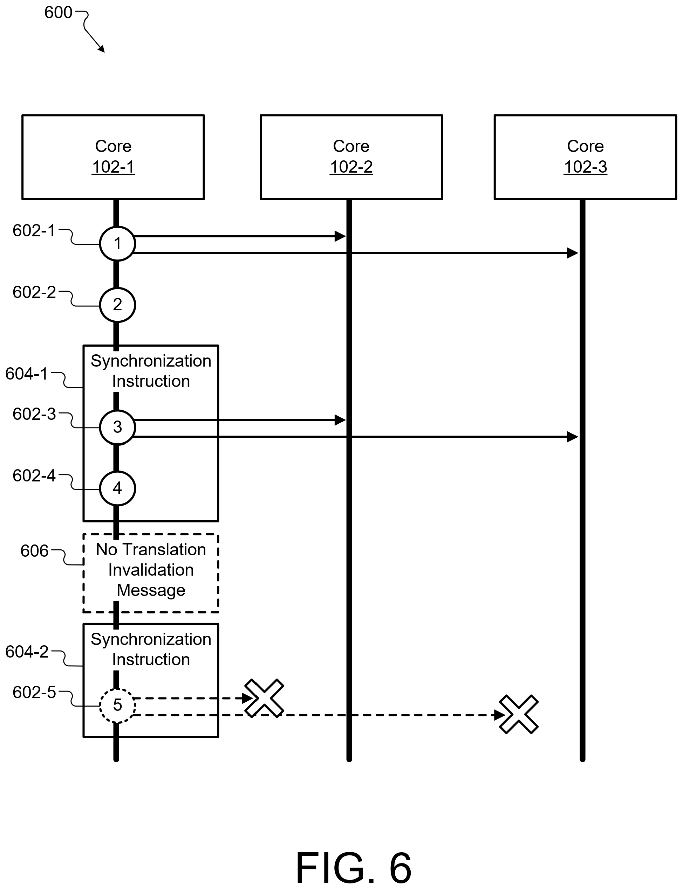

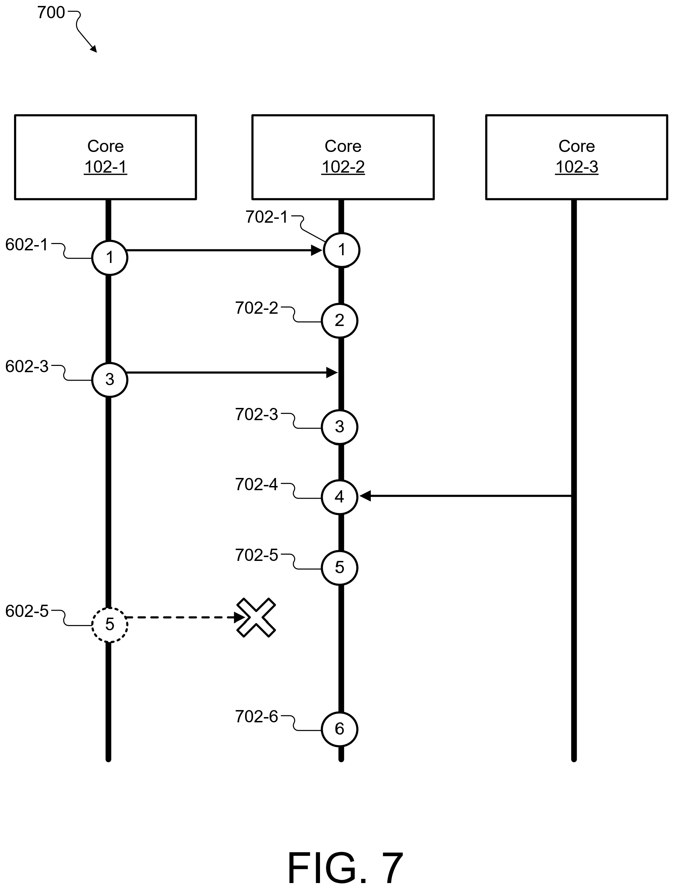

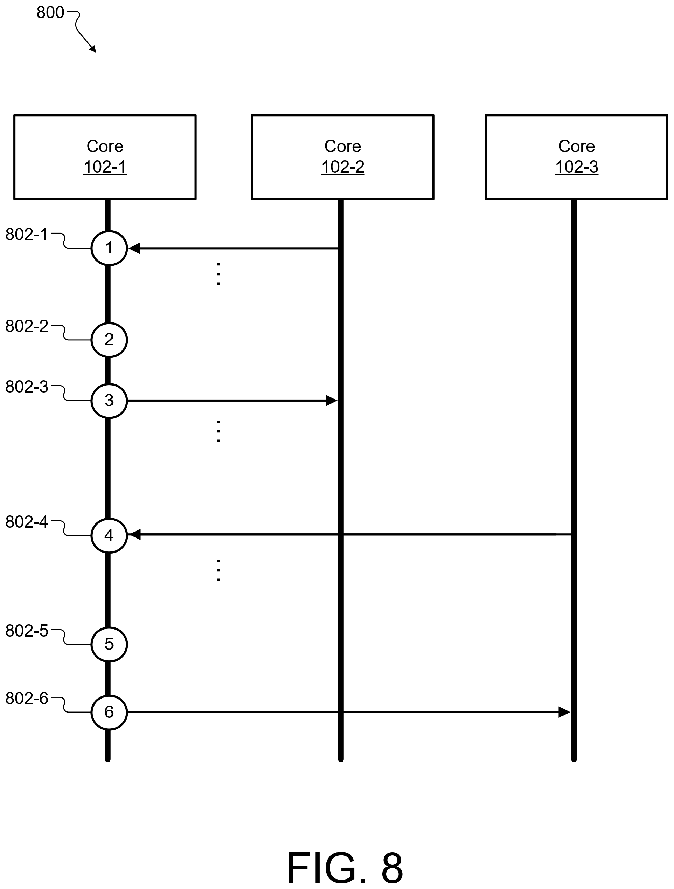

FIGS. 6-8 show several example data flow diagrams to illustrate various aspects and benefits of source-side filtering of synchronization messages in accordance with principles described herein. More particularly, a data flow diagram 600 in FIG. 6 illustrates how a first core 102-1 may perform source-side filtering of a synchronization message that would otherwise be broadcast to a core 102-2 and a core 102-3 (and other cores as may be included in a particular processor implementation, though only these three cores are shown for the examples of FIGS. 6-8). A data flow diagram 700 in FIG. 7 then illustrates certain aspects of how the source-side filtering of the synchronization message by core 102-1 (as illustrated in data flow diagram 600) may affect operations within core 102-2 as it performs tasks requested by the broadcasts from first core 102-1. A data flow diagram 800 in FIG. 8 then illustrates certain aspects of how core 102-1 may respond to synchronization messages received from the other cores (cores 102-2 and 102-3).

In each of the data flow diagrams 600, 700, and 800, three cores 102-1, 102-2, and 102-3 are shown to perform operations including internal operations (e.g., determinations, tasks, etc.) and operations that involve communicating to one or more of the other cores (as illustrated by arrows). While time will generally be understood to run from the top of each figure toward the bottom of each figure, it will be understood that certain operations may take place during different time frames (e.g., in different orders, after significant delay not shown, etc.) and that certain time-related aspects are not explicitly represented (e.g., the fact that communications between cores are not instantaneous as the horizontal arrows might suggest, etc.). In certain cases, ellipses are used to illustrate and emphasize a passage of time and/or the performance of additional operations not explicitly shown. It will be understood, however, that even where no ellipsis is shown to provide this emphasis, there may be a passage of time and performance of other (unrelated) operations unless otherwise noted. Additionally, it will be understood that while communication arrows in data flow diagrams 600, 700, and 800 show one core directly communicating with another core, some or all of these communications may actually be performed with a multi-access cache (e.g., an L2 cache such as multi-access cache 302 described above) as an intermediary (e.g., as described and illustrated in relation to FIG. 4). Each of data flow diagrams 600, 700, and 800 will now be described in more detail.

In FIG. 6, data flow diagram 600 shows the data flow for a performance, by first core 102-1, of a method similar to method 200. Specifically, as shown, first core 102-1 may perform a first operation 602-1 in which a translation invalidation message is broadcast to the other cores of the processor (i.e., cores 102-2 and 102-3 in this example). As has been mentioned, this translation invalidation message may be a TLBI message or other such message that may be triggered by any suitable instruction that first core 102-1 may be tasked with performing. For example, the instruction triggering the broadcasting of the TLBI could be any instruction that results in a change to the page tables in memory, such as an instruction that explicitly updates page table entries (e.g., a privileged instruction executed by the operating system kernel to map or unmap virtual addresses to physical addresses, change access permissions, mark pages as present or absent, or the like). As another example, the broadcast of the TLBI at operation 602-1 may be triggered by an explicit instruction whose purpose is specifically to invalidate TLB entries (e.g., an instruction that allows the OS kernel to directly control TLB invalidation based on a specific virtual address range, a particular context or address space, a specific page size, etc.).

After the broadcast of operation 602-1, first core 102-1 is shown to perform an operation 602-2 in which first core 102-1 may set (based on, or in response to, the broadcasting of the translation invalidation message at operation 602-1) a broadcast flag managed by the first core. The broadcast flag may include two states (e.g., set and cleared), such as described in relation to examples above (e.g., broadcast flag 106), and may be implemented by any suitable storage hardware (e.g., a register, a flip-flop, etc.) as may serve a particular implementation.

While the broadcast flag is set (i.e., after the performance of operation 602-2), data flow diagram 600 shows that a first synchronization instruction 604-1 (e.g., similar to synchronization instruction 112-1 described above in relation to FIG. 1) may be executed by first core 102-1. At least two operations 602-3 and 602-4 are shown to be included as part of this execution of first synchronization instruction 604-1. First, at operation 602-3, first core 102-1 may broadcast a synchronization message from first core 102-1 to the plurality of other cores (i.e., to cores 102-2 and 102-3, as shown). Second, at operation 602-4, first core 102-1 may clear the broadcast flag that had been set at operation 602-2. This clearing of the flag may be based on the broadcasting of the synchronization message in the sense that both of these actions are performed together (i.e., operation 602-4 is performed whenever operation 602-3 is performed). It will be understood, however, that they may be performed in either order (e.g., operation 602-4 could be performed before operation 602-3 is performed in certain implementations).

At a later time (after the completion of first synchronization instruction 604-1) and while the broadcast flag is still cleared (from operation 602-4), data flow diagram 600 shows that first core 102-1 executes a second synchronization instruction 604-2 (e.g., similar to second synchronization instruction 112-2 described above in relation to FIG. 1). In contrast to synchronization instruction 604-1, which involved two substantive operations 602-3 and 602-4 described above, however, synchronization instruction 604-2 is shown to be performed without any synchronization message being broadcast from first core 102-1 to the plurality of other cores. This absence of action is represented by a dashed circle representing an operation 602-5 that includes filtering (abstaining from broadcasting) a synchronization message (shown by dashed arrows and 'X's that suggest no synchronization message from first core 102-1 arrives at either of cores 102-2 or cores 102-3).

While synchronization instructions 604-1 and 604-2 may be identical instructions in software (e.g., DSB instructions that both direct the processor to perform the same action), FIG. 6 shows that these synchronization instructions are executed in very different ways by first core 102-1 (e.g., synchronization instruction 604-1 being executed by clearing the flag and sending the synchronization message, while synchronization instruction 604-2 is nullified and the broadcast of any synchronization message is filtered or avoided). As has been described, and as indicated by a note 606 between the execution of synchronization instruction 604-1 and synchronization instruction 604-2, this difference in execution is based on the fact that, between the execution of these synchronization instructions, no further translation invalidation messages have been broadcast, and the broadcast flag has thus remained cleared.

In some examples, the absence, indicated by note 606, of any translation invalidation message (e.g., TLBI, etc.) between the executing of first synchronization instruction 604-1 and second synchronization instruction 604-2 may result directly from the software code being executed by first core 102-1. For instance, in these cases, the superfluous synchronization instruction 604-2 may represent an overuse of synchronization instructions that may arise for reasons that have been described. For example, a developer may have a practice of including synchronization instructions (e.g., DSB instructions) at the beginning and end of interrupt routines or other subroutines he or she writes, leading to a superfluous synchronization instruction being executed when two such subroutines are executed in sequence. As another example, superfluous DSB instructions could be added to code as part of a debugging effort and then neglected to be removed.

Additionally or alternatively, the absence of translation invalidation messages between synchronization instructions 604-1 and 604-2 may result from at least one translation invalidation message being filtered from being broadcast between the executing of first synchronization instruction 604-1 and the executing of second synchronization instruction 604-2. For example, an instruction to broadcast a TLBI could be filtered from the source code for any of various reasons (e.g., because the core determines that it does not have the relevant TLB entry; the core has not recently accessed the virtual address range that the TLBI would effect, thereby rendering the TLBI redundant; the core determines that the TLBI targets a different address space than is currently or recently in use, thereby rendering it unnecessary; etc.). While this instruction may have properly been followed by a synchronization instruction (e.g., a DSB instruction that is not superfluous in the code), that synchronization instruction would become superfluous when the TLBI instruction is filtered out for any of these or other reasons. Accordingly, here again, it may be desirable for the hardware to be able to determine, in real-time using the broadcast flag, that, under the specific circumstances, the specific synchronization instruction 604-2 is superfluous and may be filtered (nullified, downgraded, or otherwise disposed of in a less costly way than by sending a full synchronization message such as was sent in operation 602-3 for synchronization instruction 604-1).

In FIG. 7, data flow diagram 700 shows a perspective of a receiving core (core 102-2 in this example) as messages are broadcast by other source cores (cores 102-1 and 102-3 in this example). In this example, certain operations from data flow diagram 600 continue to be illustrated as they may directly impact the receiving core 102-2. For example, as shown, operation 602-1 shows the sending of the translation invalidation message from core 102-1 to core 102-2 (the broadcast to core 102-3 is omitted in this data flow since it is not relevant to core 102-2). The sending of the synchronization message to core 102-2 at operation 602-3 is also shown, as is the abstention, at operation 602-5, of first core 102-1 sending any synchronization message as the second synchronization instruction 604-2 is executed.

Along with these operations of core 102-1 that have already been described in relation to data flow diagram 600, data flow diagram 700 further shows various operations performed by core 102-2 (the receiving core in this example where first core 102-1 is the source core). Specifically, at operation 702-1, core 102-2 receives the translation invalidation message broadcast by the first core. Then, based on the translation invalidation message, core 102-2 queues a first translation invalidation task to be performed by core 102-2 at operation 702-2 (e.g., a translation invalidation task such as illustrated in queue 508 in FIG. 5). At operation 702-3, core 102-2 may perform the first translation invalidation task. For example, the performing of the first translation invalidation task at operation 702-3 may be in response to the synchronization message from the first core (broadcast at operation 602-3, as described above). At operation 702-4, core 102-2 may then receive an additional translation invalidation message broadcast by third core 102-3 of the plurality of other cores. At operation 702-5, and similarly as described above for the first translation invalidation message (in operations 702-1 and 702-2), core 102-2 may queue, based on the additional translation invalidation message, a second translation invalidation task to be performed by core 102-2.

As described above, operation 602-5 represents an absence of action by core 102-1 at this point in the process. That is, as has been described, first core 102-1 may abstain from broadcasting any synchronization instruction at operation 602-5, despite the fact that first core 102-1 is executing the second synchronization instruction. Data flow diagram 700 illustrates a beneficial technical effect that arises from this abstention to broadcast the superfluous synchronization message. As shown in FIG. 7 by operation 602-5 occurring after operation 702-5, the executing of the second synchronization instruction (e.g., synchronization instruction 604-2) may be performed while the queueing of the second translation invalidation task (i.e., the task requested by the additional translation invalidation message received at operation 702-4 from core 102-3) is still ongoing. In other words, while this task assigned by core 102-3 is still queued (i.e., prior to the performing of the second translation invalidation task by core 102-2), core 102-1 would have sent a synchronization message if not for the filtering of that message described above (the filtering represented by operation 602-5). This could have been inefficient and produced a negative effect on processor performance, since there is no relation between this task assigned by core 102-3 and the synchronization message sent by core 102-1. In this example, only a single task is described, but if core 102-3 had sent a large batch of TLBIs with this timing, the synchronization message filtered at operation 602-5 could have caused the whole processor to pause memory transaction operations for a significant period of time (e.g., hundreds of clock cycles) while core 102-2 performed all the assigned tasks from cores 102-3. This would not have been necessary at this time, since core 102-3 has not itself sent a synchronization message.

Indeed, if the software being executed by core 102-3 is well written, core 102-3 may intentionally be delaying sending a synchronization message for as long as possible to allow core 102-2 to carry out the translation invalidation tasks at its own convenience (i.e., when it has time to do so while still performing other tasks) and, ideally, to minimize or completely avoid having to pause operations while the synchronization instruction is executed later. As shown at operation 702-6, for example, sometime after the filtering of the synchronization message at operation 602-5, core 102-2 may perform the second translation invalidation task without affecting performance or making anything else pause and wait (since the task is able to be completed prior to core 102-3 having sent its own synchronization message intended to ensure that this translation invalidation task is complete).

FIG. 8 further illustrates different scenarios in which a receive core (core 102-1 in this example) may respond to synchronization messages received from the other cores (cores 102-2 and 102-3 in this example). Specifically, data flow diagram 800 first shows an operation 802-1 in which core 102-1 receives a synchronization message broadcast by one of the plurality of other cores (e.g., core 102-2 in this example). It will be understood that this is an additional synchronization message distinct from the synchronization messages described above to be broadcast by core 102-1 in furtherance of synchronization instruction 604-1 and to be filtered by core 102-2 in furtherance of synchronization instruction 604-2.

At operation 802-2, first core 102-1 may determine that its queue of translation invalidation tasks is empty. For example, in this case, the queue of translation invalidation tasks may already be empty when the synchronization message is received by core 102-1, and the determination that the queue of translation invalidation tasks is empty may be performed (e.g., immediately performed) in response to the receiving of the synchronization message. In other words, this first example may represent a scenario (such as described above in relation to FIG. 7) in which the software code being executed by core 102-2 is developed to be efficient and give time for first core 102-1 to organically perform translation invalidation tasks (e.g., at its own convenience rather than triggering a processor-wide delay while the tasks are completed) prior to broadcasting out the synchronization message. Indeed, at operation 802-3, core 102-1 may indicate, in response to the synchronization message received at operation 802-1 and based on the determination at operation 802-2, that the first core has no outstanding translation invalidation tasks to perform. By allowing ample time for core 102-1 to clear out its queue prior to sending the synchronization message, core 102-2 has thus absorbed the delays and performance hit that the synchronization instruction could otherwise have caused, and, by the time the synchronization message is broadcast, it advantageously has a low impact on processor performance.

This example contrasts with a second example represented by operations 802-4 through 802-6. At operation 802-4, first core 102-1 receives an additional synchronization message broadcast by one of the plurality of other cores (e.g., core 102-3 in this example). It will be understood that this additional synchronization message is distinct from the synchronization messages described above to be broadcast or filtered by core 102-1 and to be broadcast by core 102-2.

At operation 802-5, first core 102-1 may again determine that its queue of translation invalidation tasks is empty. However, rather than already being empty when the synchronization message is received by core 102-1, in this case, the queue of translation invalidation tasks includes one or more translation invalidation tasks when the additional synchronization message is received by core 102-1. As such, the determination that the queue of translation invalidation tasks is empty may be performed, in this example, in response to completing the one or more translation invalidation tasks. In other words, this second example may represent a scenario (such as described above in relation to FIG. 7) in which less optimized software code is being executed or a superfluous synchronization message is received and there is not time for first core 102-1 to organically perform translation invalidation tasks (e.g., at its own convenience) prior to the broadcast of the synchronization message. Indeed, at operation 802-6, core 102-1 may again indicate, in response to the synchronization message received at operation 802-4 and based on the determination at operation 802-5, that the first core has no outstanding translation invalidation tasks to perform. However, since there was not ample time for core 102-1 to clear out its queue prior to the synchronization message, there may be more of a performance hit as the processor has to pause operations while waiting for the queue to clear out and the tasks to be completed. In some cases, this delay may be unavoidable (e.g., not caused by a superfluous synchronization instruction or suboptimal software), but it will be understood that it would be desirable to avoid this scenario where possible. Source-side filtering of synchronization messages in accordance with principles described herein may therefore be employed to help avoid such a scenario, particularly where suboptimal software code is to be executed.

As has been mentioned, various methods and processes described herein may be implemented at least in part as instructions embodied in a non-transitory computer-readable medium and executable by one or more computing devices. In general, a processor (e.g., a microprocessor) receives instructions, from a non-transitory computer-readable medium (e.g., a memory, etc.), and executes those instructions, thereby performing one or more operations such as the operations described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random-access memory (DRAM), which typically constitutes a main memory.

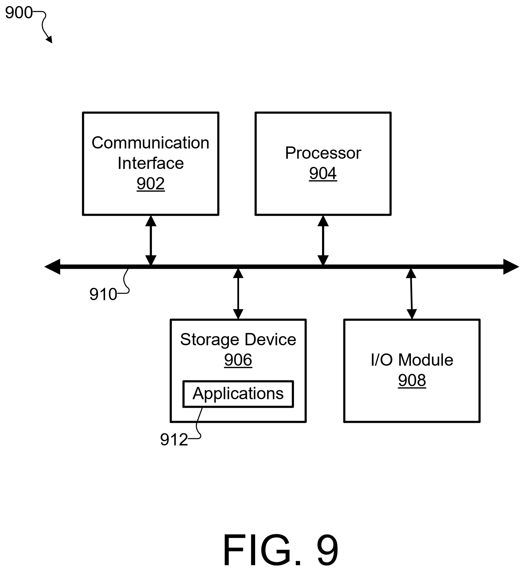

FIG. 9 shows an illustrative computing device 900 that may use or implement one or more processors (e.g., CPUs, etc.) such as those described herein. As shown in FIG. 9, computing device 900 may include a communication interface 902, a processor 904 (which may represent an implementation of processor 300 with various components such as processor cores, a multi-access cache, a communication bus, a memory controller, etc.), a storage device 906, and an input/output (I/O) module 908 communicatively connected via a communication infrastructure 910. While an illustrative computing device 900 is shown in FIG. 9, the components illustrated in FIG. 9 are not intended to be limiting. Additional or alternative components may be used in other embodiments. Components of computing device 900 shown in FIG. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data or interpreting, executing, and/or directing execution of one or more of the instructions, processes, and/or operations described herein. Processor 904 may direct execution of operations in accordance with one or more applications 912 or other computer-executable instructions such as may be stored in storage device 906 or another computer-readable medium.

Storage device 906 may include one or more data storage media, devices, or configurations and may employ any type, form, and combination of data storage media and/or device. For example, storage device 906 may include, but is not limited to, a hard drive, network drive, flash drive, magnetic disc, optical disc, RAM, dynamic RAM, other non-volatile and/or volatile data storage units, or a combination or sub-combination thereof. Electronic data, including data described herein, may be temporarily and/or permanently stored in storage device 906. For example, data representative of one or more executable applications 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. One or more I/O modules may be used to receive input for a single virtual experience. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation.

The following clauses describe implementations of source-side filtering of synchronization messages in a processor in accordance with principles described herein.

Clause 1. A method comprising: broadcasting, by a first core of a processor, a translation invalidation message to a plurality of other cores of the processor; setting, based on the broadcasting of the translation invalidation message, a broadcast flag managed by the first core; executing a first synchronization instruction when the broadcast flag is set, the executing of the first synchronization instruction including broadcasting a synchronization message from the first core to the plurality of other cores and, based on the broadcasting of the synchronization message, clearing the broadcast flag; and executing a second synchronization instruction when the broadcast flag is cleared, the executing of the second synchronization instruction being performed without any synchronization message being broadcast from the first core to the plurality of other cores.

Clause 2. The method of clause 1, further comprising: receiving, by a second core of the plurality of other cores, the translation invalidation message broadcast by the first core; queueing, based on the translation invalidation message, a first translation invalidation task to be performed by the second core; receiving, by the second core, an additional translation invalidation message broadcast by a third core of the plurality of other cores; queueing, based on the additional translation invalidation message, a second translation invalidation task to be performed by the second core; and performing, by the second core, the first translation invalidation task and the second translation invalidation task.

Clause 3. The method of clause 2, wherein: the performing of the first translation invalidation task is in response to the synchronization message from the first core; and the executing of the second synchronization instruction is performed while the queueing of the second translation invalidation task is still ongoing prior to the performing of the second translation invalidation task by the second core.

Clause 4. The method of any of clauses 1 to 3, wherein the broadcasting of the synchronization message from the first core to the plurality of other cores includes: sending, by way of a communication bus of the processor, the synchronization message from the first core to a multi-access cache configured to serve the first core and the plurality of other cores; and sending, by way of the communication bus, the synchronization message from the multi-access cache to the plurality of other cores.

Clause 5. The method of any of clauses 1 to 4, wherein the first core does not broadcast any translation invalidation message between the executing of the first synchronization instruction and the executing of the second synchronization instruction.

Clause 6. The method of clause 5, wherein at least one translation invalidation message is filtered from being broadcast between the executing of the first synchronization instruction and the executing of the second synchronization instruction.

Clause 7. The method of any of clauses 1 to 6, wherein: the first core includes a first local translation lookaside buffer (TLB) configured to support translation of virtual memory addresses to physical memory addresses; the plurality of other cores includes respective local TLBs configured to support the translation of the virtual memory addresses to the physical memory addresses; and the translation invalidation message is a TLB invalidation (TLBI) message configured to invalidate a corresponding entry in each of the respective local TLBs.

Clause 8. The method of any of clauses 1 to 7, wherein: the first core and the plurality of other cores of the processor are configured to perform out-of-order execution of memory access instructions; the first synchronization instruction is a first data synchronization barrier (DSB) instruction configured to ensure completion of pending memory access instructions prior to execution of an instruction subsequent to the first DSB instruction; and the second synchronization instruction is a second DSB instruction configured to ensure completion of pending memory access instructions prior to execution of an instruction subsequent to the second DSB instruction.

Clause 9. The method of any of clauses 1 to 8, further comprising: receiving, by the first core, an additional synchronization message broadcast by one of the plurality of other cores; and indicating, in response to the additional synchronization message and based on a determination that a queue of translation invalidation tasks is empty, that the first core has no outstanding translation invalidation tasks to perform.

Clause 10. The method of clause 9, wherein: the queue of translation invalidation tasks is empty when the additional synchronization message is received by the first core; and the determination that the queue of translation invalidation tasks is empty is performed in response to the receiving of the additional synchronization message.

Clause 11. The method of clause 9, wherein: the queue of translation invalidation tasks includes one or more translation invalidation tasks when the additional synchronization message is received by the first core; and the determination that the queue of translation invalidation tasks is empty is performed in response to completing the one or more translation invalidation tasks.

Clause 12. The method of any of clauses 1 to 11, wherein the executing of the second synchronization instruction when the broadcast flag is cleared includes nullifying the second synchronization instruction by replacing the second synchronization instruction with a no-operation (NOP) instruction.

Clause 13. The method of any of clauses 1 to 12, wherein the processor is implemented as a multi-core central processing unit (CPU).

Clause 14. A processor comprising: a first core configured to manage a broadcast flag; and a plurality of other cores; wherein the first core is configured to: broadcast a translation invalidation message to the plurality of other cores; set the broadcast flag based on the broadcast of the translation invalidation message; execute a first synchronization instruction when the broadcast flag is set, the execution of the first synchronization instruction including broadcasting a synchronization message from the first core to the plurality of other cores and, based on the broadcasting of the synchronization message, clearing the broadcast flag; and execute a second synchronization instruction when the broadcast flag is cleared, the execution of the second synchronization instruction being performed without any synchronization message being broadcast from the first core to the plurality of other cores.

Clause 15. The processor of clause 14, wherein: the plurality of other cores includes a second core and a third core; and the second core of the plurality of other cores is configured to: receive the translation invalidation message broadcast by the first core; queue, based on the translation invalidation message, a first translation invalidation task; receive an additional translation invalidation message broadcast by the third core; queue, based on the additional translation invalidation message, a second translation invalidation task; and perform the first translation invalidation task and the second translation invalidation task.

Clause 16. The processor of clause 15, wherein: the performance of the first translation invalidation task is in response to the synchronization message from the first core; and the execution of the second synchronization instruction is performed while the second translation invalidation task is still queued prior to the performance of the second translation invalidation task by the second core.

Clause 17. The processor of any of clauses 14 to 16, wherein: the processor further includes: a multi-access cache configured to serve the first core and the plurality of other cores, and a communication bus communicatively coupling the multi-access cache to the first core and to each of the plurality of other cores; and the broadcasting of the synchronization message from the first core to the plurality of other cores includes: sending, by way of the communication bus, the synchronization message from the first core to the multi-access cache, and sending, by way of the communication bus, the synchronization message from the multi-access cache to the plurality of other cores.

Clause 18. A processor core comprising: a broadcast flag managed by the processor core; and an execution unit configured to: broadcast a translation invalidation message to a plurality of other processor cores included, with the processor core, within a processor; set the broadcast flag based on the broadcast of the translation invalidation message; execute a first synchronization instruction when the broadcast flag is set, the execution of the first synchronization instruction including broadcasting a synchronization message from the processor core to the plurality of other processor cores and, based on the broadcasting of the synchronization message, clearing the broadcast flag; and execute a second synchronization instruction when the broadcast flag is cleared, the execution of the second synchronization instruction being performed without any synchronization message being broadcast from the processor core to the plurality of other processor cores.

Clause 19. The processor core of clause 18, further comprising a first local translation lookaside buffer (TLB) configured to support translation of virtual memory addresses to physical memory addresses; wherein: the plurality of other processor cores includes respective local TLBs configured to support the translation of the virtual memory addresses to the physical memory addresses; and the translation invalidation message is a TLB invalidation (TLBI) message configured to invalidate a corresponding entry in each of the respective local TLBs.

Clause 20. The processor core of any of clauses 18 to 19, wherein: the processor core and the plurality of other processor cores are configured to perform out-of-order execution of memory access instructions; the first synchronization instruction is a first data synchronization barrier (DSB) instruction configured to ensure completion of pending memory access instructions prior to execution of an instruction subsequent to the first DSB instruction; and the second synchronization instruction is a second DSB instruction configured to ensure completion of pending memory access instructions prior to execution of an instruction subsequent to the second DSB instruction.

Various implementations of the systems and techniques described herein can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A number of implementations have been described. Nevertheless, it will be understood that various modifications may be made without departing from the spirit and scope of the description and claims. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

Specific structural and functional details disclosed herein are merely representative for purposes of describing example implementations. Example implementations, however, may be embodied in many alternate forms and should not be construed as limited to only the implementations set forth herein.

It will be understood that, although the terms first, second, etc. may be used herein to describe various elements, these elements should not be limited by these terms. These terms are only used to distinguish one element from another. A first element could be termed a second element, and, similarly, a second element could be termed a first element, without departing from the scope of the implementations of the disclosure. As used herein, the term and/or includes any and all combinations of one or more of the associated listed items.

The terminology used herein is for the purpose of describing particular implementations only and is not intended to be limiting of the implementations. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of the stated features, steps, operations, elements, and/or components, but do not preclude the presence or addition of one or more other features, steps, operations, elements, components, and/or groups thereof.

It will be understood that when an element is referred to as being "coupled," "connected," or "responsive" to, or "on," another element, it can be directly coupled, connected, or responsive to, or on, the other element, or intervening elements may also be present. In contrast, when an element is referred to as being "directly coupled," "directly connected," or "directly responsive" to, or "directly on," another element, there are no intervening elements present. As used herein the term "and/or" includes any and all combinations of one or more of the associated listed items.

Spatially relative terms, such as "beneath," "below," "lower," "above" "upper," and the like, may be used herein for ease of description to describe one element or feature in relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 130 degrees or at other orientations) and the spatially relative descriptors used herein may be interpreted accordingly.

Unless otherwise defined, the terms (including technical and scientific terms) used herein have the same meaning as commonly understood by one of ordinary skill in the art to which these concepts belong. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized, or location information may be obtained (such as to a city, zip code, or state level), so that a particular location of a user cannot be determined. Thus, the user may have control over what information is collected about the user, how that information is used, and what information is provided to the user.

While certain features of the described implementations have been illustrated as described herein, many modifications, substitutions, changes, and equivalents may occur to those skilled in the art. It is therefore to be understood that the appended claims are intended to cover such modifications and changes as fall within the scope of the implementations. It will be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components, and/or features of the different implementations described. As such, the scope of the present disclosure is not limited to the particular combinations hereafter claimed, but instead extends to encompass any combination of features or example implementations described herein irrespective of whether or not that particular combination has been specifically enumerated in the accompanying claims at this time.

## Claims

1. A method comprising:
broadcasting, by a first core of a processor, a translation invalidation message to a plurality of other cores of the processor;
setting, based on the broadcasting of the translation invalidation message, a broadcast flag managed by the first core;
executing a first synchronization instruction when the broadcast flag is set, the executing of the first synchronization instruction including broadcasting a synchronization message from the first core to the plurality of other cores and, based on the broadcasting of the synchronization message, clearing the broadcast flag; and
executing a second synchronization instruction when the broadcast flag is cleared, the executing of the second synchronization instruction being performed without any synchronization message being broadcast from the first core to the plurality of other cores.

2. The method of claim 1, further comprising:
receiving, by a second core of the plurality of other cores, the translation invalidation message broadcast by the first core;
queueing, based on the translation invalidation message, a first translation invalidation task to be performed by the second core;
receiving, by the second core, an additional translation invalidation message broadcast by a third core of the plurality of other cores;
queueing, based on the additional translation invalidation message, a second translation invalidation task to be performed by the second core; and
performing, by the second core, the first translation invalidation task and the second translation invalidation task; wherein, optionally,
the performing of the first translation invalidation task is in response to the synchronization message from the first core; and
the executing of the second synchronization instruction is performed while the queueing of the second translation invalidation task is still ongoing prior to the performing of the second translation invalidation task by the second core.

3. The method of claim 1 or 2, wherein the broadcasting of the synchronization message from the first core to the plurality of other cores includes:
sending, by way of a communication bus of the processor, the synchronization message from the first core to a multi-access cache configured to serve the first core and the plurality of other cores; and
sending, by way of the communication bus, the synchronization message from the multi-access cache to the plurality of other cores.

4. The method of any one of the preceding claims, wherein the first core does not broadcast any translation invalidation message between the executing of the first synchronization instruction and the executing of the second synchronization instruction; wherein, optionally, at least one translation invalidation message is filtered from being broadcast between the executing of the first synchronization instruction and the executing of the second synchronization instruction.

5. The method of any one of the preceding claims, wherein:
the first core includes a first local translation lookaside buffer (TLB) configured to support translation of virtual memory addresses to physical memory addresses;
the plurality of other cores includes respective local TLBs configured to support the translation of the virtual memory addresses to the physical memory addresses; and
the translation invalidation message is a TLB invalidation (TLBI) message configured to invalidate a corresponding entry in each of the respective local TLBs.

6. The method of any one of the preceding claims, wherein:
the first core and the plurality of other cores of the processor are configured to perform out-of-order execution of memory access instructions;
the first synchronization instruction is a first data synchronization barrier (DSB) instruction configured to ensure completion of pending memory access instructions prior to execution of an instruction subsequent to the first DSB instruction; and
the second synchronization instruction is a second DSB instruction configured to ensure completion of pending memory access instructions prior to execution of an instruction subsequent to the second DSB instruction.

7. The method of any one of the preceding claims, further comprising:
receiving, by the first core, an additional synchronization message broadcast by one of the plurality of other cores; and
indicating, in response to the additional synchronization message and based on a determination that a queue of translation invalidation tasks is empty, that the first core has no outstanding translation invalidation tasks to perform.

8. The method of claim 7,
wherein the queue of translation invalidation tasks is empty when the additional synchronization message is received by the first core; and
the determination that the queue of translation invalidation tasks is empty is performed in response to the receiving of the additional synchronization message;
or,
wherein the queue of translation invalidation tasks includes one or more translation invalidation tasks when the additional synchronization message is received by the first core; and
the determination that the queue of translation invalidation tasks is empty is performed in response to completing the one or more translation invalidation tasks.

9. The method of any one of the preceding claims, wherein the executing of the second synchronization instruction when the broadcast flag is cleared includes nullifying the second synchronization instruction by replacing the second synchronization instruction with a no-operation (NOP) instruction.

10. A processor comprising:
a first core configured to manage a broadcast flag; and
a plurality of other cores;
wherein the first core is configured to:
broadcast a translation invalidation message to the plurality of other cores;
set the broadcast flag based on the broadcast of the translation invalidation message;
execute a first synchronization instruction when the broadcast flag is set, the execution of the first synchronization instruction including broadcasting a synchronization message from the first core to the plurality of other cores and, based on the broadcasting of the synchronization message, clearing the broadcast flag; and
execute a second synchronization instruction when the broadcast flag is cleared, the execution of the second synchronization instruction being performed without any synchronization message being broadcast from the first core to the plurality of other cores.

11. The processor of claim 10, wherein:
the plurality of other cores includes a second core and a third core; and
the second core of the plurality of other cores is configured to:
receive the translation invalidation message broadcast by the first core;
queue, based on the translation invalidation message, a first translation invalidation task;
receive an additional translation invalidation message broadcast by the third core;
queue, based on the additional translation invalidation message, a second translation invalidation task; and
perform the first translation invalidation task and the second translation invalidation task; wherein, optionally,
the performance of the first translation invalidation task is in response to the synchronization message from the first core; and
the execution of the second synchronization instruction is performed while the second translation invalidation task is still queued prior to the performance of the second translation invalidation task by the second core.

12. The processor of claim 11, wherein:
the processor further includes:
a multi-access cache configured to serve the first core and the plurality of other cores, and
a communication bus communicatively coupling the multi-access cache to the first core and to each of the plurality of other cores; and
the broadcasting of the synchronization message from the first core to the plurality of other cores includes:
sending, by way of the communication bus, the synchronization message from the first core to the multi-access cache, and
sending, by way of the communication bus, the synchronization message from the multi-access cache to the plurality of other cores.

13. A processor core comprising:
a broadcast flag managed by the processor core; and
an execution unit configured to:
broadcast a translation invalidation message to a plurality of other processor cores included, with the processor core, within a processor;
set the broadcast flag based on the broadcast of the translation invalidation message;
execute a first synchronization instruction when the broadcast flag is set, the execution of the first synchronization instruction including broadcasting a synchronization message from the processor core to the plurality of other processor cores and, based on the broadcasting of the synchronization message, clearing the broadcast flag; and
execute a second synchronization instruction when the broadcast flag is cleared, the execution of the second synchronization instruction being performed without any synchronization message being broadcast from the processor core to the plurality of other processor cores.

14. The processor core of claim 13, further comprising a first local translation lookaside buffer (TLB) configured to support translation of virtual memory addresses to physical memory addresses;
wherein:
the plurality of other processor cores includes respective local TLBs configured to support the translation of the virtual memory addresses to the physical memory addresses; and
the translation invalidation message is a TLB invalidation (TLBI) message configured to invalidate a corresponding entry in each of the respective local TLBs.

15. The processor core of claim 13 or 14, wherein:
the processor core and the plurality of other processor cores are configured to perform out-of-order execution of memory access instructions;
the first synchronization instruction is a first data synchronization barrier (DSB) instruction configured to ensure completion of pending memory access instructions prior to execution of an instruction subsequent to the first DSB instruction; and
the second synchronization instruction is a second DSB instruction configured to ensure completion of pending memory access instructions prior to execution of an instruction subsequent to the second DSB instruction.
